# EUROPEAN PATENT APPLICATION

(11) **EP 2 953 187 A1**
(43) Date of publication of application: **09.12.2015**
(21) Application number: 14182377.3
(22) Date of filing: 27.08.2014
(51) Int. Cl.: H01M 2/30, H01M 10/42, H01M 10/46, A24F 47/00

(54) **Battery for electronic cigarette**

(30) Priority: 06.06.2014 CN 201420298128 U
(71) Applicant: Huang, Jinzhen, Shenzhen, Guangdong (CN)
(72) Inventor: Huang, Jinzhen, Shenzhen, Guangdong (CN)
(74) Representative: Sun, Yiming

(57) **Abstract**

The present application is directed to electronic cigarette accessories. A battery for electronic cigarette includes a housing, a battery and four ports, wherein two ports are voltage output ports, the remaining two ports are expansion ports or voltage output ports. The present application can allow the battery for electronic cigarette to possess expansion capability through providing two voltage outport ports and two expansion ports, so as to facilitate the exchange of the internal information of the battery for electronic cigarette with the external information or an increase in the output power of the battery, allowing the battery to be able to supply energy at load with greater power. Furthermore, the output interface of the battery for electronic cigarette does not require sophisticated metal components, which production cost is half of that for metal connectors.

## Description

### FIELD OF THE TECHNOLOGY

The present application is directed to electronic cigarette accessories, in particular, to a battery for electronic cigarette.

### BACKGROUND ART

At present, the use of electronic cigarette as a real cigarette replacement possesses the beneficial characteristics such as environmental friendliness and harmlessness without second hand smoke, and has been widely accepted by the public. The battery of electronic cigarette is a component providing energy to the atomizer of the electronic cigarette. In general, it is formed from components of the lithium battery, control switch, indicating light and output port.

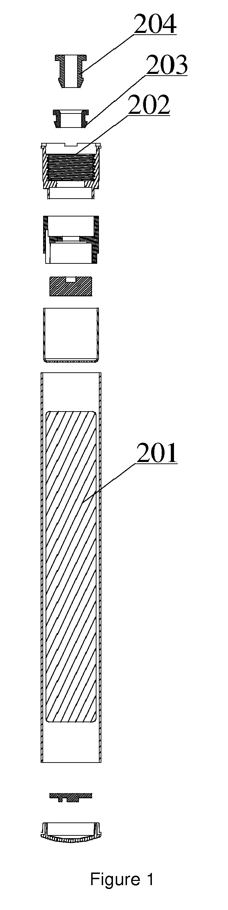

Figure 1 illustrates a common battery for electronic cigarette, including a lithium battery 201, an internal spiralled ring 202, an insulation circle 203 and a short metal circle 204. The internal spiralled ring 202, the insulation circle 203 and the short metal circle 204 are compacted together forming a voltage output port of the battery. In particular, the short metal circle 204 is a cathode port of the battery, the internal spiralled ring 202 is an anode port of the battery. Such kind of battery for electronic cigarette can only provide two basic voltage output ports supplying energy to the electric heating wires within the atomizer, so has no expansion capability.

Furthermore, the interface component of the above battery for electronic cigarette requires sophisticated lathe in order to be produced from the processing. Therefore, the production cost is very expensive. The metal component requires compaction with the insulation circle 203. Hence, the production process is complicated and the assemblage and production costs are very high.

### SUMMARY OF THE INVENTION

The technical problem that the present application seeks to solve is to provide a battery for electronic cigarette possessing an expansion capability.

The present application is directed to a battery for electronic cigarette, including a housing and a battery, wherein the battery for electronic cigarette further includes four ports, two ports are voltage output ports, and remaining two ports are expansion ports.

Two of the expansion ports may be input ports of a sensor, input ports of a status parameter of an atomizer for electronic cigarette, or voltage output ports.

The battery for electronic cigarette may further include a battery output interface base that abuts with the housing and four slots inside the battery output interface base; the four ports are embedded inside the four slots, respectively.

The battery output interface base may include two different gaps, the location of one gap corresponds with the location of the voltage output ports, and the location of another gap corresponds with the location of the expansion ports.

The battery output interface base may be formed from insulation materials.

The battery for electronic cigarette may further include a controller configured to control conduction or termination between the battery and the four ports.

The controller may be a switch under manual operation or a switch under air current triggering.

The battery for electronic cigarette may further include a charging module that energizes the battery.

The charging module may be provided at a lower part of the battery.

### BRIEF DESCRIPTION OF THE DRAWINGS

Figure 1 is a disassembled structural illustrative view of a battery for electronic cigarette in prior art.
Figure 2 is a front illustrative view of a battery for electronic cigarette according to an embodiment of the present application.
Figure 3 is a sectional illustrative view of a battery for electronic cigarette in Figure 2 along a C-C sectional line.
Figure 4 is a top illustrative view of a battery for electronic cigarette in Figure 2.

### DETAILED DESCRIPTION OF THE INVENTION

In order to enable the technical problem, technical solution and beneficial effect that the subject application seeks to solve to be clearer in understanding, below is a further detailed description of the present application with combination of the drawings and embodiments. It should be understood that the described specific embodiment merely serves to explain the present application and is not used to limit the same.

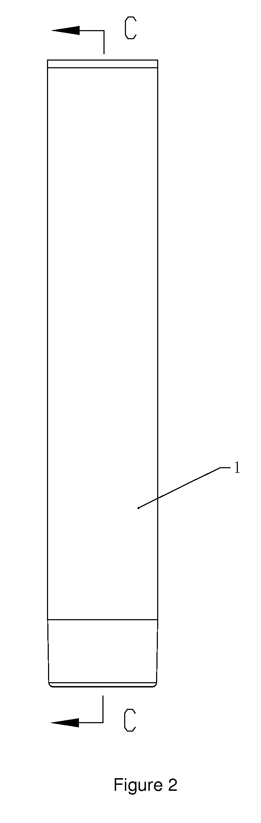

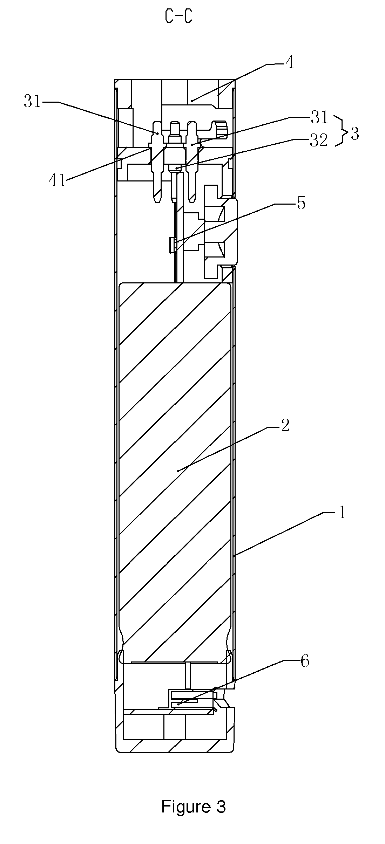

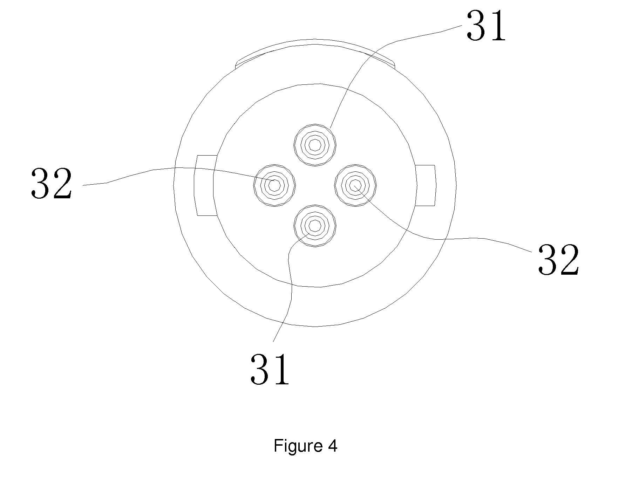

Figures 2 to 4 illustrate a battery for electronic cigarette of an embodiment of the present application, including a housing 1, a battery 2 and four ports 3, wherein the two ports 3 are voltage output ports 31, the remaining two ports 3 are expansion ports 32.

The above two expansion ports are input ports of a sensor, input ports of a status parameter of a atomizer for electronic cigarette or voltage output ports.

When the above two expansion ports are the input ports of the sensor or the input ports of the status parameter of the atomizer for electronic cigarette, the internal information of the battery for electronic cigarette can exchange with the external information, such that multi-functionalities and intellectualization development of the battery for electronic cigarette can be promoted. When the above two expansion ports are voltage output ports, they can enable the battery for electronic cigarette to supply energy simultaneously to the two sets of heating wires (not shown in the drawings) inside the atomizer, allowing the amount of smoke of the atomizer to double. Furthermore, the output interface of the battery for electronic cigarette in the present embodiment does not need sophisticated metal components; therefore, the production cost is half of that for metal connectors.

Specifically, the above battery for electronic cigarette also includes a battery output interface base 4 that abuts the housing 1, a controller 5 configured for controlling the conduction and termination between the battery 2 and the four ports 3, and a charging module 6 configured for energizing the battery 2.

The four ports are all elastic metal terminals, whose surfaces are plated, and possess good conductivity and low contact resistance. The battery output interface base 4 is produced preferably from the insulation materials; four slots 41 are provided inside the battery output interface base 4. The four ports 3 are embedded inside the four slots 41, respectively. The battery output interface base 4 possesses two different gaps (not shown in the drawings), wherein the location of one gap corresponds with the location of the voltage output port 31. The location of another gap corresponds with the location of the expansion port 32, such that the input port of the atomizer for electronic cigarette can be distinguished.

Preferably, the above controller 5 is a switch under manual operation or a switch under air current triggering. The charging module 6 is a standard charging interface module, such as USB interface, which is provided at the lower part of the battery 2.

The above is merely a preferred embodiment of the present application and is not used to limit the present application. Any amendments, equivalent replacements and modifications etc. made without departing from the spirit and concept of the present application shall all fall within the scope of protection of the present application.

## Claims

1. A battery for electronic cigarette, comprising a housing and a battery, wherein the battery for electronic cigarette further comprises four ports, two ports are voltage output ports, and remaining two ports are expansion ports.

2. The battery for electronic cigarette according to claim 1, wherein two of the expansion ports are input ports of a sensor, input ports of a status parameter of an atomizer for electronic cigarette, or voltage output ports.

3. The battery for electronic cigarette according to claim 1, wherein the battery for electronic cigarette further comprises a battery output interface base that abuts with the housing and four slots inside the battery output interface base; the four ports are embedded inside the four slots, respectively.

4. The battery for electronic cigarette according to claim 3, wherein the battery output interface base comprises two different gaps, the location of one gap corresponds with the location of the voltage output ports, and the location of another gap corresponds with the location of the expansion ports.

5. The battery for electronic cigarette according to claim 3, wherein the battery output interface base is formed from insulation materials.

6. The battery for electronic cigarette according to claim 1, wherein the battery for electronic cigarette further comprises a controller configured to control conduction or termination between the battery and the four ports.

7. The battery for electronic cigarette according to claim 6, wherein the controller is a switch under manual operation or a switch under air current triggering.

8. The battery for electronic cigarette according to claim 1, wherein the battery for electronic cigarette further comprises a charging module that energizes the battery.

9. The battery for electronic cigarette according to claim 8, wherein the charging module is provided at a lower part of the battery.
